# EUROPÄISCHE PATENTSCHRIFT

(11) **EP 1 815 120 B1**
(45) Veröffentlichungstag und Bekanntmachung des Hinweises auf die Patenterteilung: **22.05.2013**
(21) Anmeldenummer: 05807924.5
(22) Anmeldetag: 10.11.2005
(51) Int. Cl.: F02D 41/22, F02D 41/38, F02M 65/00, G01M 3/04, G01M 3/02, G01M 3/00, F02D 41/20, F02M 47/02

(54) **VERFAHREN UND VORRICHTUNG ZUR LECKAGEPRÜFUNG EINES KRAFTSTOFFEINSPRITZVENTILS EINER BRENNKRAFTMASCHINE**
METHOD AND DEVICE FOR LEAK TESTING A FUEL INJECTING VALVE FOR AN INTERNAL COMBUSTION ENGINE
PROCEDE ET DISPOSITIF POUR VERIFIER L'ETANCHEITE D'UNE SOUPAPE D'INJECTION DE CARBURANT D'UN MOTEUR A COMBUSTION INTERNE

(30) Priorität: 18.11.2004 DE 102004055575
(43) Veröffentlichungstag der Anmeldung: 08.08.2007
(73) Patentinhaber: ROBERT BOSCH GMBH, 70442 Stuttgart (DE)
(72) Erfinder: DEGLER, Traugott, 70825 Korntal (DE); EMPACHER, Lars, 70806 Kornwestheim (DE); HEMPEL, Andreas, 71679 Asperg (DE); BEUER, Wolfgang, 70374 Stuttgart (DE); JAEGER, Hans-Martin, 71636 Ludwigsburg (DE); HOWEY, Myriam, 71254 Ditzingen (DE)
(86) Internationale Anmeldenummer: PCT/EP2005/055874
(87) Internationale Veröffentlichungsnummer: WO 2006/053852

(56) Entgegenhaltungen:
- EP-A- 0 785 358
- EP-A- 0 857 867
- EP-A- 0 860 601
- EP-A- 1 118 761
- EP-A- 1 201 905
- EP-A- 1 310 655
- WO-A-2005/047690
- DE-A1- 10 309 609
- FR-A- 2 716 719
- US-A- 6 142 120
- US-A1- 2001 047 681
- US-B1- 6 578 553
- PATENT ABSTRACTS OF JAPAN Bd. 1998, Nr. 14, 31. Dezember 1998 (1998-12-31) & JP 10 252615 A (NIPPON INJECTOR KK), 22. September 1998 (1998-09-22)

## Beschreibung

### Stand der Technik

Die Erfindung betrifft ein Verfahren und eine Vorrichtung zur Leckageprüfung eines Kraftstoffeinspritzventils einer Brennkraftmaschine mit einem Aktor, durch den eine Verbindung des Kraftstoffeinspritzventils mit einer Hochdruckkraftstoffquelle wenigstens mittelbar durch eine elektrische Steuereinheit gesteuert wird, nach den Oberbegriffen der unabhängigen Ansprüche.

Bei Kraftfahrzeugen mit einer Brennkraftmaschine wird der Kraftstoff mit Hilfe einer Kraftstoffpumpe aus einem Kraftstoffbehälter gefördert und über Kraftstoffleitungen den auch als Injektoren bezeichneten Kraftstoffeinspritzventilen zugeführt. Überschüssiger Kraftstoff gelangt üblicherweise über eine Rücklaufleitung in den Kraftstoffbehälter zurück. Bei Brennkraftmaschinen mit Hochdruckeinspritzung, insbesondere bei Brennkraftmaschinen mit Selbstzündung, schließt sich an die Kraftstoffpumpe eine weitere Pumpe an, die einen sehr hohen Druck in einem Hochdruckbereich, auch als Rail bezeichnet, erzeugt, der mit den Injektoren in Verbindung steht. Bei solchen Kraftstoffversorgungssystemen besteht die Gefahr eines Lecks des Hochdruckteils, so dass Kraftstoff in die Rücklaufleitung gelangt. Dies wird üblicherweise als innere Leckage bezeichnet. Darüber hinaus ist auch eine Leckage nach außen möglich, bei der Kraftstoff unter hohem Druck in den Motorraum gelangt. Eine erhöhte Leckage eines Injektors führt zu einer bleibenden Abweichung des Raildrucks. Dies kann zu einem Defekt der Brennkraftmaschine führen.

Aus der DE 197 03 891 A1 ist ein Verfahren und eine Vorrichtung zur Erkennung einer Leckage in einem Kraftstoffversorgungssystem einer Brennkraftmaschine, insbesondere einer Brennkraftmaschine mit einem Common-Rail-System bekannt, bei dem ein Drucksensor den Druck im Hochdruckbereich erfasst. Hierbei werden wenigstens zwei Druckwerte zu unterschiedlichen Zeitpunkten erfasst, aus diesen beiden Druckwerten wird eine Kraftstoffmengenbilanz erstellt, wobei ausgehend von der Kraftstoffmengenbilanz auf einen Fehler geschlossen wird. Durch ein solches Verfahren und eine derartige Vorrichtung kann zwar ganz allgemein eine Leckage erkannt werden, es ist jedoch nicht möglich, eine zylinderspezifische Leckage auf diese Weise zu erkennen. Im Falle einer Leckage ist so der Austausch aller Injektoren notwendig, obwohl beispielsweise nur ein einziger Injektor eine Leckage aufweist. Das ist nicht nur aus Kostengesichtspunkten nachteilig, der Austausch sämtlicher Injektoren erfordert auch einen nicht unerheblichen Montageaufwand.

Ein Verfahren und eine Vorrichtung zur Leckageprüfung eines Kraftstoffeinspritzventils einer Brennkraftmaschine, wobei die Temperatur wenigstens eines Teils des Kraftstoffeinspritzventils ermittelt wird und aus der Temperatur auf das Vorhandensein eines Lecks geschlossen wird ist außerdem aus den Dokumenten EP 1 310 655, US 2001/047681, EP 1 201 905, US 6,578,553 und DE 103 09 609 bekannt.

Bei dem Dokument DE 103 09 609 wird die Solenoidspulentemperatur auf der Grundlage des Solenoidspulenwiderstands des Elektromagnetventils der Einspritzvorrichtung geschätzt.

Eine weitere Leckageerkennung ist aus der EP 0 860 601 bekannt. Dort wird überprüft, ob der Druck im Rail bei einer Einspritzung wie erwartet abfällt und nach der Einspritzung wie erwartet ansteigt. Diese erwarteten Werte für den Druckanstieg bzw. Druckabfall werden unter anderem abhängig von der Temperatur des Kraftstoffs berechnet.

Des weiteren ist aus der EP 0 857 867 ein Verfahren und eine Vorrichtung zur Erkennung einer Leckage bekannt. Dort wird ausgehend von einer Massenbilanz der Kraftstoffströme im Kraftstoffsystem eine Leckage erkannt.

Lediglich für Werkstattzwecke ist darüber hinaus eine injektorindividuelle Leckagemessung mit einem Messröhrchen am Injektor bekannt, die allerdings nur bei Personenkraftwagen eingesetzt wird und zudem nicht von allen Fahrzeugherstellern akzeptiert wird, da die Leckagemessung ein offenes Hantieren mit Kraftstoff bei laufender Brennkraftmaschine erfordert, was ein nicht unerhebliches Sicherheitsrisiko darstellt.

Der Erfindung liegt daher die Aufgabe zugrunde, ein Verfahren und eine Vorrichtung zur Leckageprüfung eines Kraftstoffeinspritzventils einer Brennkraftmaschine zu vermitteln, durch die auf einfache und sichere Weise festgestellt werden kann, ob ein einzelner Injektor eine Leckage aufweist.

### Vorteile der Erfindung

Diese Aufgabe wird bei einem Verfahren und einer Vorrichtung zur Leckageprüfung eines Kraftstoffeinspritzventils einer Brennkraftmaschine der eingangs beschriebenen Art durch die Merkmale der Ansprüche 1 und 8 gelöst.

Die Erfindung nutzt die empirisch gefundene Erkenntnis, dass eine Leckage den Injektorkörper einschließlich seiner Anbauteile stark aufheizt. Grundidee ist es daher, eine Temperaturgröße zu erfassen, die die Temperatur wenigstens eines Teils des Kraftstoffeinspritzventils charakterisiert und hieraus auf das Vorhandensein eines Lecks zu schließen. Als Temperaturgröße kann unmittelbar die Temperatur mittels eines Sensors gemessen werden. Besonders vorteilhaft ist es, dass die Temperaturgröße aus elektrischen Größen abgeleitet wird. So ist der Widerstand der Spule eines Magnetventils von der Temperatur der Spule abhängig. Das heißt durch erfassen der Strom- und Spannungswerte ergibt sich der Widerstand. Ausgehend von dem Widerstand wird dann die Temperatur berechnet. Besonders vorteilhaft ist hierbei, dass als Temperaturgröße auch eine der Messgrößen, wie beispielsweise der Strom oder die Spannung, oder eine berechnete Größe, wie beispielsweise der Widerstand, als Temperaturgröße verwendet werden kann. Im Folgenden wird diese Temperaturgröße lediglich als Temperatur bezeichnet.

Da im Falle eines Defekts die Leckage nicht sprunghaft, sondern kontinuierlich ansteigt, können mittels einer Temperaturmessung defekte Injektoren auf diese Weise detektiert und ausgetauscht werden, bevor ein Totalausfall der Brennkraftmaschine auftritt.

Besonders vorteilhaft ist das Verfahren bei einem Magnetventil anwendbar. In diesem Falle wird die Temperatur einer Magnetspule des Magnetventils erfasst und hieraus auf das Vorhandensein eines Lecks geschlossen.

Besonders vorteilhaft ist es, dass die Leckagemessung ohne Messung der Einzelrücklaufmengen der Injektoren möglich ist. Dadurch wird der Aufwand der Messung deutlich verringert. Bei Systemen, bei denen die Einzetrücktaufmengen nicht oder nur schwer messbar sind, wird eine Diagnose durch diese Vorgehensweise erst möglich.

Dabei wird auf das Vorhandensein eines Lecks immer dann geschlossen, wenn die Temperaturgröße einen vorgebbaren Schwellenwert und/oder wenn der Zeitgradient der Temperaturgröße einen vorgebbaren weiteren Schwellenwert und/oder wenn ein die zeitliche Änderung des Zeitgradienten der Temperaturgröße einen vorgebbaren weiteren Schwellenwert überschreiten.

Zur Verbesserung der Leckageerkennung wird die Temperatur der Brennkraftmaschine bei der Festlegung der vorgebbaren Schwellenwerte berücksichtigt, da die Temperatur sich verfälschend auf die Spulentemperatur auswirken kann. Bevorzugt wird dabei sogar die Temperaturgröße eines einzelnen Zylinders erfasst, da innerhalb der Brennkraftmaschine Temperaturgradienten auftreten können.

Die Temperaturgröße kann prinzipiell auf die unterschiedlichste Art und Weise, beispielsweise auch mittels Temperatursensoren oder dergleichen erfasst werden. Dies ist insbesondere bei Piezoaktoren sinnvoll. Bei der vorliegenden Erfindung wird die Temperaturgröße aus dem Spulenstrom und zwar aus dem Tastverhältnis einer Haltestromregelung bestimmt. Bevorzugt wird die Temperaturgröße aus der Höhe des Stromniveaus bei einem fest vorgegebenen Tastverhältnis bestimmt. Hierdurch können bereits vorhandene Steuereinheiten verwendet werden und es erübrigen sich zusätzliche Sensorelemente. Besonders vorteilhaft ist es, wenn in Phasen, in denen keine Ansteuerung des Aktors erfolgt, dieser mit einem Prüfstrom beaufschlagt wird. Vorzugsweise wird hierbei ein Konstantstrom gewählt und die Temperaturgröße aus der Höhe der sich einstellenden Spannung ermittelt.

Dies bedeutet, die Temperaturgröße wird aus dem Verhältnis von Spannung und Strom ermittelt, wobei jeweils eine dieser ins Verhältnis gesetzten Größen am Aktor konstant ist, während die andere Größe gemessen wird.

Die erfindungsgemäße Vorgehensweise kann sowohl im Fahrbetrieb durch die übliche Steuereinheit, die die Brennkraftmaschine im Fahrbetrieb steuert, als auch im Rahmen der Wartung durch ein Diagnosetester, der im folgenden auch als Tester bezeichnet wird, durchgeführt werden. Hier ist eine Messung auch bei älteren Fahrzeugen ohne Änderung im Steuergerät möglich. Dabei ist eine beliebige Aufteilung der einzelnen Elemente und Aufgaben auf die Steuereinheit und den Tester möglich. Das heißt die Mittel zur Durchführung der erfindungsgemäßen Vorgehensweise sind zumindest teilweise Bestandteil der Steuereinheit, bzw. die Mittel zur Durchführung der erfindungsgemäßen Vorgehensweise sind zumindest teilweise Bestandteil des Testers.

Besonders vorteilhaft ist es, wenn die Differenz zwischen zwei Temperaturgrößen, die bei unterschiedlichen Raildrücken gemessen werden, ausgewertet wird.

### Zeichnung

Weitere Vorteile und Merkmale der Erfindung sind Gegenstand der nachfolgenden Beschreibung sowie der zeichnerischen Darstellung eines Ausführungsbeispiels der Erfmdung.

In der Zeichnung zeigen:
- Fig. 1: eine schematische Schnittdarstellung einer erfindungsgemäßen Vorrichtung mit einem Magnetventilinjektor
- Fig. 2: schematisch das Tastverhältnis über der Spulentemperatur und
- Fig. 3: ein Flussdiagramm einer Ausführungsform der Vorgehensweise.

### Beschreibung von Ausführungsbeispielen

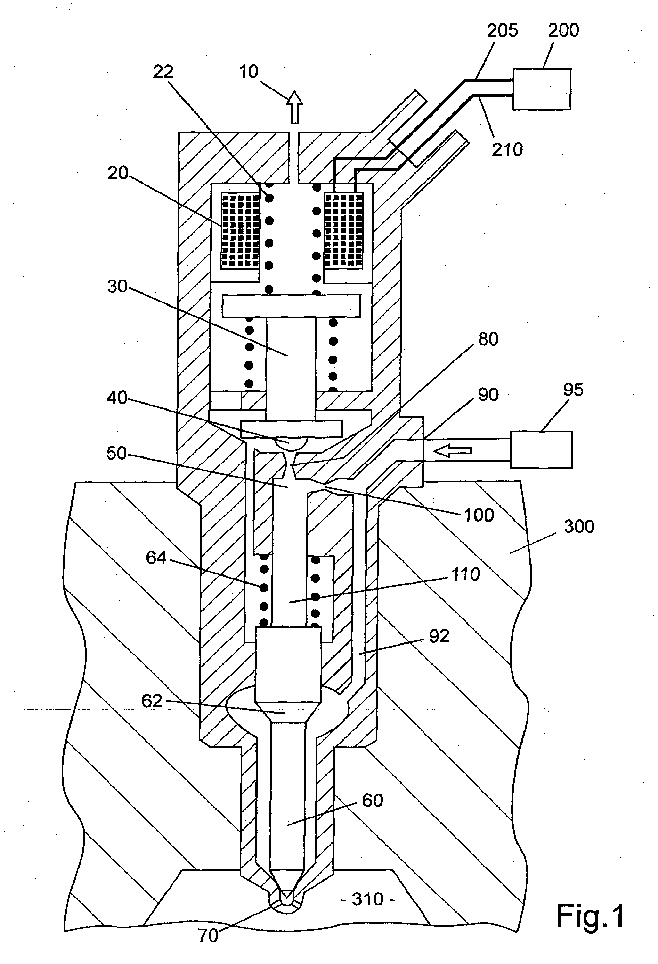

Der Spritzbeginn und die Einspritzmenge werden mit einem elektrisch ansteuerbaren, in einen Zylinder 300 einer Brennkraftmaschine eingebauten Injektor, beispielsweise einem in Fig. 1 dargestellten Magnetventil-Injektor, eingestellt. Der Kraftstoff wird von einer Kraftstoffhochdruckquelle 95, die beispielsweise bei einem Common-Rail-System wenigstens eine Kraftstofhochdruckpumpe und einen Hochdruckspeicher (Rail) umfasst, über einen Hochdruckanschluss 90 in einen Hochdruck-Zulaufkanal 92 zu einer auch als Düsennadel bezeichneten Einspritzdüse 60 sowie über eine Zulaufdrossel 100 in einen Ventilsteuerraum 50 geführt. Der Ventilsteuerraum 50 ist über eine Ablaufdrossel 80, die durch ein Magnetventil, gebildet aus einer Magnetspule 20, einem Magnetanker 30 sowie einer Ventilkugel 40, geöffnet werden kann, mit einem Kraftstoffrücklauf 10 verbunden.

Im geschlossenen Zustand der Ablaufdrossel 80 überwiegt die hydraulische Kraft auf einen Ventilkolben 110 gegenüber der Kraft auf eine Druckschulter 62 der Düsennadel 60. Infolgedessen wird die Düsennadel 60 in ihren Sitz gepresst und schließt den Hochdruck-Zulaufkanal 92 dicht zum (nicht dargestellten) Motorraum ab. Bei nicht laufendem Motor und fehlendem Druck beispielsweise in dem Hochdruckspeicher, schließt eine Düsenfeder 64 den Injektor.

Beim Ansteuern des Magnetventils, also der Magnetspule 20 und damit des Magnetankers 30 und der Ventilkugel 40 wird die Ablaufdrossel 80 dadurch geöffnet, dass sich die Ventilkugel 40 von ihrem Sitz entfernt. Die Zulaufdrossel 100 verhindert einen vollständigen Druckausgleich, so dass der Druck in dem Ventilsteuerraum 50 und damit die hydraulische Kraft auf den Ventilkolben 110 sinkt. Sobald die hydraulische Kraft die auf die Druckschulter 62 der Düsennadel 60 wirkende Kraft unterschreitet, öffnet die Düsennadel 60. Der Kraftstoff gelangt nun durch Spritzlöcher 70 in einen Brennraum 310 eines Motors. Bei nicht mehr angesteuertem Magnetventil (Magnetspule 20) wird der Magnetanker 30 durch die Kraft der Ventilfeder 22 nach unten gedrückt. Die Ventilkugel 40 verschließt die Ablaufdrossel 80. Dadurch baut sich im Ventilsteuerraum 50 über den Zufluss der Zulaufdrossel 100 wieder ein Druck auf, der dem Raildruck entspricht. Dieser größere Druck übt eine höhere Kraft auf den Ventilkolben 110 aus, so dass die Düsennadel 60 wieder schließt. Der Durchfluss der Zulaufdrossel 100 bestimmt die Schließgeschwindigkeit der Düsennadel 60.

Diese indirekte Ansteuerung der Düsennadel 60 über ein hydraulisches Kraftverstärkersystem wird eingesetzt, weil die zu einem schnellen Öffnen der Düsennadel 60 benötigten Kräfte mit dem Magnetventil nicht erzeugt werden können. Die dabei zusätzlich zur eingespritzten Kraftstoffmenge benötigte Steuermenge gelangt über Drosseln des Steuerraums in den Kraftstoffrücklauf 10.

Im Falle einer Leckage wird nun der Injektorkörper einschließlich seiner Anbauteile stark erwärmt. Die Leckagemenge selbst ist ebenfalls heiß und heizt den im Kraftstoffrücklauf angeordneten Magnetanker 30 und die Magnetspule 20 auf. Grundidee der Erfindung ist es nun, aus der Temperatur wenigstens eines Teils des Injektors, insbesondere der Temperatur der Magnetspule 20, auf ein Leck zu schließen.

Die Temperatur der Magnetspule 20 wird beispielsweise über das Tastverhältnis einer an sich bekannten Haltestromregelung in einer Steuereinheit 200 ermittelt. Hierbei werden Anschlussleitungen 205, 210, die zur Ansteuerung der Magnetspule 20 ohnehin benötigt werden, zur Ermittlung der Temperatur verwendet, wodurch sich in besonders vorteilhafter Weise zusätzliche Leitungen erübrigen. Die Spulentemperatur wird beispielsweise aus der Höhe des Stromniveaus bei einem fest vorgegebenen Tastverhältnis bestimmt.

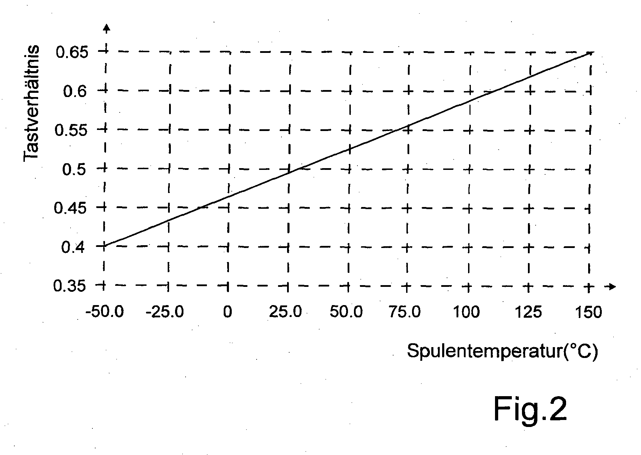

Wie in Fig. 2 dargestellt ist, ändert sich das Tastverhältnis der Haltestromregelung proportional zur Spulentemperatur. Aus dem Tastverhältnis der Haltestromregelung kann daher auf die Temperatur der Magnetspule 20 geschlossen werden.

Übersteigt die Temperatur der Magnetspule 20 einen vorgebbaren Schwellenwert und/oder übersteigt ein vorgebbarer Zeitgradient der Temperatur und/oder ein vorgebbarer Wert der zeitlichen Änderung des Zeitgradienten der Temperatur jeweils vorgebbare Schwellenwerte, wird auf eine Leckage des Kraftstoffeinspritzventils geschlossen. Um Fehler der Leckagemessung auszuschließen, muss dabei die Temperatur des Motors und insbesondere die Temperatur des einzelnen Zylinders 300, in dem das Kraftstoffeinspritzventil verbaut ist, bei der Festlegung der Schwellenwerte berücksichtigt werden.

Die oben beschriebene Vorgehensweise ist vorzugsweise für den laufenden Betrieb in der Brennkraftmaschine geeignet. Das heißt das Verfahren wird während des Betriebs der Brennkraftmaschine ausgeführt. Besonders vorteilhaft ist es, wenn das erfindungsgemäße Verfahren durch einen externen Diagnosetester durchgeführt und/oder initialisiert wird. Dies erfolgt dann im Rahmen der Wartung in der Werkstatt.

Bei der Verwendung eines solchen Diagnosetester, im Folgenden auch als Tester bezeichnet, ist die Anwendung der im Folgenden beschriebenen Vorgehensweise besonders vorteilhaft. Dieses Verfahren kann auch im Fahrbetrieb von der Steuereinheit durchgeführtwerden.

Die Messung der Temperatur erfolgt hier vorzugsweise in einer Phase in der keine Einspritzungen erfolgen. Die Messung kann dabei in der Pause zwischen zwei Einspritzungen oder in einer Phase, in der kein Kraftstoff zugemessen wird, erfolgen. Zur Messung wird der Aktor mit einem Konstantstrom beaufschlagt. Aus dem Verhältnis zwischen Strom und Spannung, die entweder bekannt sind oder gemessen werden, ergibt sich der Widerstand des Aktors und damit die Temperatur des Aktors.

An möglichst zugänglicher Stelle wird der Kabelbaum an eine Steckverbindung aufgetrennt und der Tester mittels eines Adaptersteckers zwischen Motorsteuergerät und Injektor eingekoppelt. Dadurch erhält der Tester einen Messabgriff der elektrischen Injektoranschlüsse.

Für die Temperaturmessung bzw. die Widerstandsmessung wird über eine entsprechende Triggerung die zur Verfügung stehende Pause zwischen den Einspritzsteuerungen des Motorsteuergeräts am Injektor ermittelt. In diesen Pausen wird vom Tester ein konstanter Messstrom auf die Injektoren aufgeprägt. Es stellt sich ein Spannungsabfall ein, der erfasst wird. Ausgehend von dem eingeprägten Strom und der gemessenen Spannung wird der Widerstand und damit die Temperatur berechnet.

Dieser Messablauf wird automatisiert für jeden Injektor bei einem niedrigen und bei einem hohen Raildruck durchgeführt. Durch Auswertung der Differenz ΔT der Temperatur bei den unterschiedlichen Raildrücken kann der Einfluss unterschiedlicher thermischer Grundzustände eliminiert werden, die auf die jeweilige Zylinderposition zurückzuführen sind. Überschreitet die Differenz ΔT eines Zylinders einen festgelegten Grenzwert, so wird dieser Injektor als defekt erkannt.

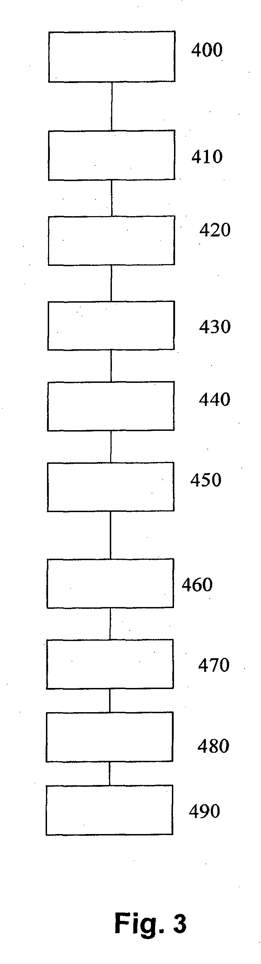

In Figur 3 ist der Ablauf der Prüfung an Hand eines Flussdiagramms dargestellt. In Schritt 400 startet das Prüfprogramm. In Schritt 410 wird ein Drucksteller derart angesteuert, dass sich ein erstes Raildruckniveau einstellt. In Schritt 420 wird eine Zeitdauer abgewartet, in der sich die Temperatur des Injektors bei dem eingestellten Raildruckniveau stabilisiert. In Schritt 430 wird die Spulentemperatur aller Zylinder durch beaufschlagen mit einem Konstantstrom und erfassen des Spannungsabfalls ermittelt. In Schritt 440 wird der Drucksteller derart angesteuert, dass sich ein zweites Raildruckniveau einstellt. Vorzugsweise ist das zweite Raildruckniveau deutlich höher als das erste Raildruckniveau. In Schritt 450 wird eine Zeitdauer abgewartet, in der sich die Temperatur des Injektors bei dem eingestellten Raildruckniveau stabilisiert. In Schritt 460 wird die Spulentemperatur aller Zylinder durch beaufschlagen mit einem Konstantstrom und erfassen des Spannungsabfalls ermittelt. Anschließend in Schritt 470 werden die Differenzen ΔT zwischen den beiden Temperaturwerten bei den unterschiedlichen Raildrücken ermittelt und mit einem Grenzwert verglichen. Ist die ermittelte Differenz bei wenigstens einem der Zylinder größer als ein Grenzwert, so wird ein Fehler erkannt. In Schritt 480 erfolgt die Anzeige des Ergebnisses. In Schritt 490 endet das Prüfverfahren.

## Patentansprüche

1. Verfahren zur Leckageprüfung eines Kraftstoffeinspritzventils einer Brennkraftmaschine, wobei die Temperatur wenigstens eines Teils des Kraftstoffeinspritzventils ermittelt wird und aus der Temperatur auf das Vorhandensein eines Lecks geschlossen wird, **dadurch gekennzeichnet, dass** die Temperatur aus dem Tastverhältnis einer Haltestromregelung bestimmt wird.

2. Verfahren nach Anspruch 1, **dadurch gekennzeichnet, dass** die Temperatur aus der Höhe des Stromniveaus bei einem fest vorgegebenen Tastverhältnis bestimmt wird.

3. Verfahren nach Anspruch 1, **dadurch gekennzeichnet, dass** die Temperatur in Phasen ermittelt wird, in denen der Aktor nicht angesteuert wird.

4. Verfahren nach Anspruch 1, **dadurch gekennzeichnet, dass** die Differenz zweier Temperatur bei unterschiedlichen Kraftstoffdrücken ausgewertet wird.

5. Verfahren nach Anspruch 1, **dadurch gekennzeichnet, dass** auf ein Leck dann geschlossen wird, wenn die Temperatur einen vorgebbaren Schwellenwert und/oder wenn der Zeitgradient der Temperatur einen vorgebbaren weiteren Schwellenwert und/oder wenn die zeitliche Änderung des Zeitgradienten der Temperatur einen vorgebbaren weiteren Schwellenwert überschreiten.

6. Verfahren nach Anspruch 6, **dadurch gekennzeichnet, dass** die Temperatur der Brennkraftmaschine bei der Festlegung der Schwellenwerte berücksichtigt wird.

7. Verfahren nach Anspruch 6, **dadurch gekennzeichnet, dass** die Temperatur eines Zylinders (300) der Brennkraftmaschine, in dem das Kraftstoffeinspritzventil verbaut ist, bei der Festlegung der Schwellenwerte berücksichtigt wird.

8. Vorrichtung zur Leckageprüfung eines Kraftstoffeinspritzventils einer Brennkraftmaschine, wobei Mittel vorgesehen sind, die dazu eingerichtet sind, die Temperatur wenigstens eines Teils des Kraftstoffeinspritzventils zu ermitteln und aus der Temperatur auf das Vorhandensein eines Lecks zu schließen, **dadurch gekennzeichnet, dass** die Temperatur aus dem Tastverhältnis einer Haltestromregelung bestimmt wird.

9. Vorrichtung nach Anspruch 8, **dadurch gekennzeichnet, dass** als Aktor ein Magnetventil verwendet wird.

10. Vorrichtung nach Anspruch 8, **dadurch gekennzeichnet, dass** die Mittel zumindest teilweise Bestandteil einer Steuereinheit sind, die die Brennkraftmaschine im Fahrbetrieb steuert.

11. Vorrichtung nach Anspruch 8, **dadurch gekennzeichnet, dass** die Mittel zumindest teilweise Bestandteil eines Diagnosetester sind.

## Claims

1. Method for leak-testing a fuel injection valve of an internal combustion engine, wherein the temperature of at least part of the fuel injection valve is determined and the presence of a leak is inferred from the temperature, **characterized in that** the temperature is determined from the pulse duty factor of a holding current regulating device.

2. Method according to Claim 1, **characterized in that** the temperature is determined from the level of current at a permanently predefined pulse duty factor.

3. Method according to Claim 1, **characterized in that** the temperature is determined in phases in which the actuator is not actuated.

4. Method according to Claim 1, **characterized in that** the difference between two temperatures is evaluated for different fuel pressures.

5. Method according to Claim 1, **characterized in that** a leak is inferred if the temperature exceeds a predefinable threshold value and/or if the time gradient of the temperature exceeds a predefinable further threshold value and/or if the change in the time gradient of the temperature over time exceeds a predefinable further threshold value.

6. Method according to Claim 6, **characterized in that** the temperature of the internal combustion engine is taken into account in the definition of the threshold values.

7. Method according to Claim 6, **characterized in that** the temperature of a cylinder (300) of the internal combustion engine in which the fuel injection valve is installed is taken into account in the definition of the threshold values.

8. Device for checking a leak of a fuel injection valve of an internal combustion engine, wherein means are provided which are configured for determining the temperature of at least part of the fuel injection valve and inferring the presence of a leak from the temperature, **characterized in that** the temperature is determined from the pulse duty factor of a holding current regulating device.

9. Device according to Claim 8, **characterized in that** a solenoid valve is used as an actuator.

10. Device according to Claim 8, **characterized in that** the means are at least partially a component of a control unit which controls the internal combustion engine in the driving mode.

11. Device according to Claim 8, **characterized in that** the means are at least partially a component of a diagnostic tester.

## Revendications

1. Procédé pour vérifier l'étanchéité d'une soupape d'injection de carburant de moteur à combustion interne, la température d'au moins une partie de la soupape d'injection de carburant étant déterminée et la présence d'une fuite étant déduite à partir de la température, **caractérisé en ce que** la température est déterminée à partir du rapport de commande par impulsion d'un réglage de courant de maintien.

2. Procédé selon la revendication 1, **caractérisé en ce que** la température est déterminée à partir de la hauteur du niveau de courant dans un rapport de commande par impulsion prédéfini de façon permanente.

3. Procédé selon la revendication 1, **caractérisé en ce que** la température est déterminée pendant des phases pendant lesquelles l'actionneur n'est pas commandé.

4. Procédé selon la revendication 1, **caractérisé en ce que** la différence des deux températures est analysée à différentes pressions de carburant.

5. Procédé selon la revendication 1, **caractérisé en ce que** l'on conclut à la présence d'une fuite lorsque la température dépasse une valeur seuil prédéfinissable et/ou lorsque le gradient de temps de la température dépasse une autre valeur seuil prédéfinissable et/ou lorsque la variation dans le temps du gradient de temps de la température dépasse une autre valeur seuil prédéfinissable.

6. Procédé selon la revendication 6, **caractérisé en ce que** la température du moteur à combustion interne est prise en compte lors de la détermination des valeurs seuils.

7. Procédé selon la revendication 6, **caractérisé en ce que** la température d'un cylindre (300) du moteur à combustion interne dans lequel la soupape d'injection de carburant est montée est prise en compte lors de la détermination des valeurs seuils.

8. Dispositif pour vérifier l'étanchéité d'une soupape d'injection de carburant de moteur à combustion interne, des moyens étant prévus pour déterminer la température d'au moins une partie de la soupape d'injection de carburant et pour déduire la présence d'une fuite à partir de la température, **caractérisé en ce que** la température est déterminée à partir du rapport de commande par impulsion d'un réglage de courant de maintien.

9. Dispositif selon la revendication 8, caractérisé en ce l'actionneur utilisé est une électrovanne.

10. Dispositif selon la revendication 8, **caractérisé en ce que** les moyens font au moins partiellement partie d'une unité de commande commandant le moteur à combustion interne dans le mode de conduite.

11. Dispositif selon la revendication 8, **caractérisé en ce que** les moyens font au moins partiellement partie d'un système de diagnostic par test.
